(19)

Europäisches Patentamt

European Patent Office

Office européen des brevets

(11) **EP 3 557 240 A1**

(12) **EUROPEAN PATENT APPLICATION**

(43) Date of publication:
**23.10.2019 Bulletin 2019/43**

(21) Application number: **18167680.0**

(22) Date of filing: **17.04.2018**

(51) Int Cl.:
**G01N 27/414** (2006.01)          **B82Y 15/00** (2011.01)
**B82Y 30/00** (2011.01)          **A61B 5/0408** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Centre National de la Recherche Scientifique
75016 Paris (FR)**
• **UNIVERSITE DE MONTPELLIER
34090 Montpellier (FR)**

(72) Inventors:
• TODRI-SANIAL, Aida
34730 Prades-Le-Lez (FR)
• PANDEY, Reetu Raj
34090 Montpellier (FR)
• LIANG, Jie
34070 Montpellier (FR)

(74) Representative: **IPAZ
18 rue de la République
34000 Montpellier (FR)**

(54) **PIEZORESISTIVE SENSOR DEVICE WITH AMPLIFICATION MODULE**

(57)     The present invention relates to a sensor device comprising a sensor module connected to an amplification module, said amplification module comprising at least one organic field effect transistor (FET), in particular a carbon nanotube transistor, and amplifying a signal transmitted by said sensor module, wherein said sensor module and said amplification module are co-integrated on a same support. It also provides a sensor device wherein said sensor module is a piezoresistive sensor module which comprises at least one micropattern of a composite mixture layered on said support, the composite in particular comprises a polymer and carbon nanotubes.The present invention also provides a process for preparing said sensor device, and an apparatus comprising at least one sensor device according to the invention. The sensor device can be used for the monitoring of a biosignal, e.g. an electroencephalogram or electrocardiogram or the body temperature.

Figures 3A and 3B

**Description**

**DOMAIN OF THE INVENTION**

The present invention relates to sensor devices comprising a sensor module connected to an amplification module, adapted for the amplification of weak signals. The present invention also relates to a process for preparing the same and to an apparatus comprising said sensor device, in particular a medical device usable for monitoring a signal or a body parameter.

**PRIOR ART**

When detecting weak signals, it is essential to amplify said signal obtained from a sensor to detect the output without any signal loss before transmitting it to signal processing units, such as operational amplifiers. Sensors connected with organic field effect transistors (FET) have been described.

Franklin and Chen ("Length scaling of carbon nanotube transistors" Nature Nanotechnology Letters, 2010, 5, 858-862) discloses a carbon-nanotube field effect transistor having channel length from 3 $\mu$m to 15 nm.

So et al. ("Carbon nanotube based pressure sensor for flexible electronics" Nature Nanotechnology Letters, 2010, 5, 858-862*)* discloses a pressure sensor comprising vertically aligned carbon nanotubes supported by a PDMS matrix, integrated with field-effect transistor.

Yamamoto et al. ("Printed multifunctional flexible device with an integrated motion sensor for health care monitoring" Applied Sciences and Engineering, 2016) describe flexible devices comprising organic FET.

Koo et al. ("Wearable electrocardiogram monitor using carbon nanotube electronics and color-tunable organic light-emitting diodes" ACS NAno, 2017, 11, 10032-41*) discloses an electrocardiogram device comprising four CNT transistors.*

However, there is still a need for a sensitive and compact sensor device for the detection of a weak signal.

The inventors propose the co-integration, a same support, of organic FET next to a sensor module, wherein said FET can be modulated by top gate to amplify a weak detected signal. In a device proposed by the inventors, said at least one organic FET is integrated close to the sensor, without any bonding as the sensor. To achieve this goal, both the sensor and the amplification module are fabricated on a same substrate and on a same support, said substrate is detached from the device at the end of the fabrication process, through a lift-off process.

A sensor device according to the invention is reliable, sensitive, and its production is not expensive and not complex as both sensor and amplification modules are co-integrated. It presents a high interest in detecting a weak signal, which intensity is at most 10 mV, and preferably at most 1 mV. A sensor device of the invention is responsive to thermal, electrical, mechanical and morphological changes.

A sensor device of the invention can be integrated in an apparatus, particularly a medical apparatus, and allows continuous monitoring of weak body signal, for example by being put in contact with the skin, authorizing the activity and autonomy of a patient. Therefore, a sensor device according to the invention presents a great interest in various applications requiring the detection of signals, in particular to be integrated in apparatuses for monitoring body parameters.

**BRIEF DESCRIPTION OF THE INVENTION**

The present invention provides a sensor device comprising a sensor module connected to an amplification module, wherein said amplification module comprises at least one organic filed effect transistor (FET) and amplifies a signal emitted by said sensor module, wherein said sensor module and said amplification module are integrated on a same support.

The present invention also provides a sensor device comprising a sensor module connected to an amplification module, wherein said amplification module comprises at least one organic filed effect transistor (FET) and amplifies a signal emitted by said a piezoresistive sensor module, wherein said piezoresistive sensor module comprises at least one micropattern of a composite mixture layered on said support. The composite mixture comprises at least a polymer and CNTs.

The present invention also provides a process for preparing a sensor device according to the invention, said process comprising the steps of:

- providing a support,
- forming a sensor module on said support, and
- forming, on the same support, an amplification module comprising at least one organic FET.

The present invention further provides an apparatus comprising at least one sensor device according to the invention, or at least one sensor device obtained by a process according the invention, wherein said apparatus is a biosignal monitoring apparatus.

The present invention further relates to the use of at least one apparatus according to the invention for providing a biosignal such as electroencephalogram or electrocardiogram or for monitoring a body parameter, such as the respiratory flow, the body temperature or the heart rate.

Characteristics, advantages and uses of the subject matters of the present invention are more detailed hereunder, in an illustrated and non-limiting way. The disclosure of ranges expressed as "from ... to ..." mean that the limits are included in said ranges.

Figures 1 illustrates an example of an organic field effect transistor (FET) as used in a sensor device, wherein "G" is gate, "S" is source and "D" is drain.

Figures 2A to 2C illustrate an example of micropattern design and the dimension and physical properties of micropattern units. Figure 2A represents a top view of a micropattern design, with "d" representing the dimension of a micropattern unit;

figure 2B represents a top view of a micropattern unit; figure 2C represents a 3D view of a micropattern unit.

Figures 3A and 3B represent a sensor device according to examples 1 and 2, figure 3A is a side view and figure 3B a top view of said biosensor.

Figure 4 represents the main steps of a process for preparing a sensor device according to the invention.

For ease of illustration, the various figures are not drawn to scale.

## DETAILED DESCRIPTION OF THE INVENTION

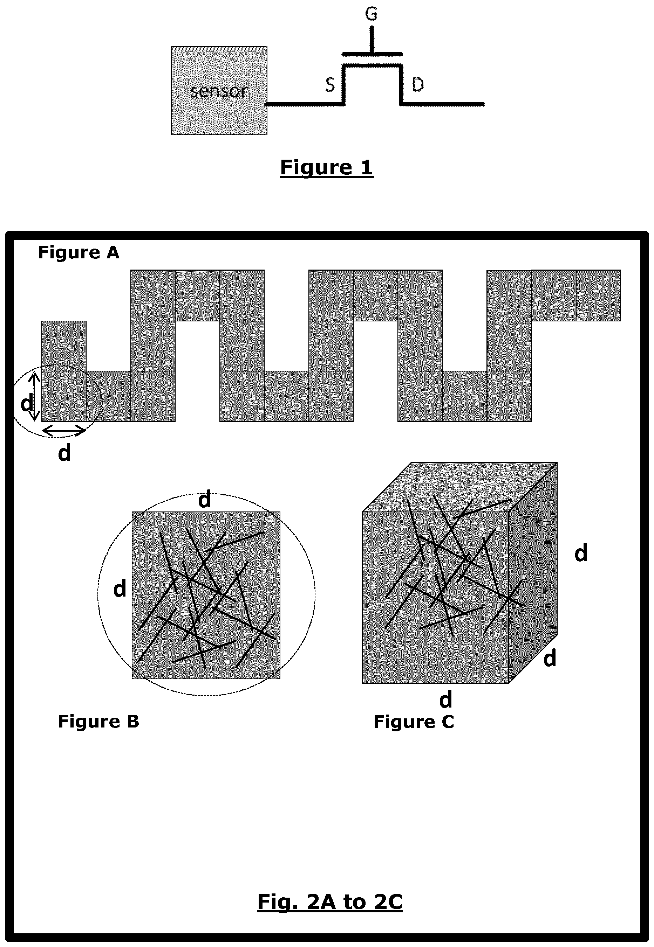

In a first aspect, the present invention relates to a sensor device comprising a sensor module connected to an amplification module, said amplification module comprising at least one organic field effect transistor (FET) and amplifying a signal transmitted by said sensor module, wherein said sensor module and said amplification module are co-integrated on a same support (Figure 1).

The term "sensor device" refers to an analytical device comprising a physico-chemical detector able to detect, and preferably to quantify, a signal. A "sensor module" is a system able to detect and transmit a signal, whereas an "amplification module" is able to amplify the signal transmitted by said sensor module. An "organic field transistor (FET)" is a field-effect transistor using an organic semiconductor in its channel. Organic semiconductor include, for example, graphene, carbon nanotubes (CNTs) and organic polymers. P-type and n-type FET may be used.

In a particular embodiment, a sensor device according to the present invention comprises several organic FETs in a parallel circuit, more particularly said sensor device comprises 2, 3, 4, 5, 6 or more organic FET. In a preferred embodiment, a sensor device according to the present invention comprises 4 organic FETs in a parallel circuit.

In another particular embodiment, a sensor device according to the present invention comprises several carbon nanotubes FETs (CNTFETs) in a parallel circuit, more particularly said sensor device comprises 2, 3, 4, 5, 6 or more CNTFETs. In a preferred embodiment, a sensor device according to the present invention comprises 4 CNTFETs in a parallel circuit. Carbon nanotubes are defined as allotropes of carbon with a cylindrical nanostructure ; CNTs are classified as single-walled nanotubes (SWNTs) and multi-walled nanotubes (MWNTs). A CNTs sensor device is a sensor device which conductive properties are based on the presence of carbon nanotubes.

In another particular embodiment, a sensor device according to the present invention comprises several organic FETs in a parallel circuit and a carbon nanotubes (CNTs) sensor device.

In a more particular embodiment, a sensor device according to the present invention comprises several organic FETs in a parallel circuit and a carbon nanotubes (CNTs) sensor device, wherein said sensor module and said amplification module are co-integrated on a same flexible support. In a more particular embodiment, a sensor device according to the present invention comprises several carbon nanotubes FETs (CNTFETs) in a parallel circuit and a carbon nanotubes (CNTs) sensor device, wherein said sensor module and said amplification module are co-integrated on a same flexible support.

A flexible support is able to curve or bend without breaking, said flexible support is preferably also stretchable, as it does not break when submitted to a strain. In a biosensor device according to the invention, the support exhibits at least one of the following properties: flexibility, stretchability, biocompatibility, permeability, wearability by a living, such as a human, an animal or a vegetal organism.

In a particular embodiment, a sensor device according to the present invention comprises several carbon nanotubes FETs (CNTFETs) in a parallel circuit and a carbon nanotubes (CNTs) sensor device, wherein said sensor module and said amplification module are co-integrated on a same flexible support, wherein said support comprises, or consists of, a flexible and optionally biocompatible material.

More particularly, a sensor device according to the present invention comprises several organic nanotubes FETs in a parallel circuit and a carbon nanotubes (CNTs) sensor device, wherein said sensor module and said amplification module are co-integrated on a same flexible and biocompatible support, wherein said support comprises at least a flexible biocompatible material. More specifically, said material is a synthetic polymer which is preferably chosen among:

- siloxane, preferably PolyDimethylSiloxane (PDMS, dimethicone, $-[O-Si(CH_3)_2]_n$),
- acrylate, preferably Poly(methylmetacrylate) (PMMA),
- polycarbonate and
- poly-L-lactide (PLA).

Said polymer is a large molecule composed of many covalently bonded repeated subunits and can be present as a homopolymer, containing only a single type of repeated units, or as a copolymer, containing two or more types of repeated units.

In a more particular embodiment, a sensor device according to the present invention comprises several carbon nanotubes FETs (CNTFETs) in a parallel circuit and a carbon nanotubes (CNTs) sensor device, wherein said sensor module and said amplification module are co-integrated on a support comprising, or consisting of, siloxane, and preferably PDMS.

A person skilled in the art can easily define the proportion of said material, preferably a synthetic polymer, within the support, and the possible addition of "fillers" or additives, such as plasticizers, in order to modulate the properties of the support and/or to lower the industrial cost of said support.

In a more particular embodiment, a sensor device according to the present invention comprises at least one organic FET, said organic FET having a channel length from 1 to 3 $\mu$m, preferably a channel length of 2 $\mu$m.

In a second aspect, the present invention relates to a sensor device comprising at least one organic FET and a sensor module co-integrated on a same support, wherein said sensor module is a piezoresistive biosensor comprising at least one micropattern of a composite mixture layered on said support.

A "piezoresistive biosensor" refers to a biosensor able to detect a piezoresistive effect, which is a change in the electrical resistivity of said biosensor when mechanical strains are applied. The term "biosensor" refers to an analytical device comprising a physico-chemical detector able to detect, and preferably to quantify, a biosignal, which is defined as a signal emitted by a living body, organ, or tissue. Therefore, a sensor device according to the second aspect of the present invention may be defined as a sensor of a mechanical signal, and particularly as a strain sensor or biosensor. A "biocompatible" material is able to interact with a living body, including humans and animals, without representing any toxicity for said living body, A "composite mixture" refers to a combination of different substances.

A composite mixture of a micropattern in a sensor device according to this aspect of the invention comprises at least:

- a synthetic biocompatible polymer, defined as a large molecule composed of many covalently bonded repeated subunits, wherein a "biocompatible" material is able to interact with a living body, including humans and animals, without representing any toxicity for said living body,
- and carbon nanotubes (CNTs), defined as allotropes of carbon with a cylindrical nanostructure ; carbon nanotubes are classified as single-walled nanotubes (SWNTs) and multi-walled nanotubes (MWNTs),

In said composite mixture, CNTs and polymer are homogenously mixed.

A "micropattern" refers to a miniaturized pattern. In a biosensor according to the invention, said micropattern is defined by its continuous rectangular shape, wherein said shape is curved forming right angles, as exemplified in figures 2A to 2C. Said micropattern is also defined by its dimensions, including its shape and thickness. The design of said micropattern is obtainable by a process such as disclosed in the present application.

A sensor according to the invention contacts with the surface of a living body, for example skin, through said micropattern, which thus plays a critical role in sensor performance. The micropattern is designed to provide optimum sensitivity to the biosensor, its design includes the following parameters: i) micropattern surface area, ii) micropattern shape, iii) CNTs concentration and iv) physico-chemical properties of the polymer in the composite mixture.

In a particular embodiment of a sensor device according to the second aspect of the invention, the piezoresistive biosensor comprises at least one micropattern of a composite mixture comprising at least a flexible polymer and carbon nanotubes (CNTs).

In another particular embodiment of a sensor device according to the invention, the piezoresistive biosensor comprises at least one micropattern of a composite mixture comprising at least a flexible polymer and carbon nanotubes (CNTs).

In a more particular embodiment, a sensor device according to the present invention comprises at least one organic FET and a piezoresistive biosensor, said piezoresistive receptor comprising at least one micropattern having a continuous rectangular shape of a composite mixture comprising a flexible polymer and carbon nanotubes (CNTs) layered on the support.

In a particular embodiment of the present invention, the support and the micropattern comprise an identical polymer. In another embodiment of the present invention, the polymers comprised in the micropattern and in the support are different.

In a sensor device according to this aspect of the invention, the material of the support and the composite mixture exhibit at least one of the following properties: flexibility, stretchability, biocompatibility, permeability, wearability by a living organism, such as a human, an animal or a vegetal organism.

In a particular embodiment, a micropattern of a piezoresistive biosensor according to this aspect of the invention is made of a composite mixture comprising a flexible polymer and CNTs, wherein the percentage of CNTs, as expressed as a percentage of weight of said polymer, ranges from 0.0001 to 2.5 %, from 0.001 to 2.4 %, from 0.01 to 2.2 %, from 0.01 to 2.0 %, from 0.015 to 2.5 %, from 0.02 to 2%, from 0.1 to 1.5 %, from 0.2 to 1.5 % or from 0.3 to 1 %. The range of 0.0001 to 2.5 wt% CNTs corresponds to 0.001 to 25.9 g/L, respectively. More particularly, a polymer of a composite mixture of the invention comprises a polymer, CNTs and at least one additive and /or other fillers, wherein said additive may represent less than 3 % as expressed by weight of polymer.

In a piezoresistive biosensor according to this aspect of the invention, the micropattern is connected to an electrical interface, said electrical interface comprising at least one terminal element at one extremity of said micropattern and at least one terminal element at the other extremity of said micropattern. Said electrical interface preferably consists of a pair of electrodes. According to a particular embodiment, said electrodes are chosen among the following: Cr/Au, Pd/Au, Cr/Pt and Pd/Pt electrodes. The thickness of said micropattern is from 10 to 100 $\mu$m, from 15 to 50 $\mu$m and preferably of 25 $\mu$m.

In a particular embodiment, in a sensor device according to this aspect of the present invention said at least one micropattern, wherein the total surface area of said at least one micropattern (i.e. the total micropatterned surface of said sensor module) represents from 35 % to 65 %, from 40 % to 60 %, from 45 % to 55 %, and preferably 50 % of the surface area of said sensor module. The surface area of said sensor module is the surface area of the flexible polymer support without the surface area of the electrodes.

In another particular embodiment, a micropattern of a piezoresistive biosensor according to the present invention has an optimal surface area which is defined as:

$$\text{area} = {}^{q}\!/_{2p} - a_p$$

wherein p is the ratio of composite resistance versus sensor area ; q is the cross point of the linear relationship of composite resistance and sensor area; $a_p$ is the area of one micropattern.

In a particular embodiment, a piezoresistive biosensor according to the present invention comprises a composite mixture comprising a flexible biocompatible polymer chosen among :

- siloxane, preferably PolyDimethylSiloxane (PDMS),
- acrylate, preferably Poly(methylmetacrylate) (PMMA),
- polycarbonate and
- poly-L-lactide (PLA).

In a more particular embodiment, a piezoresistive biosensor according to the present invention comprises a composite mixture comprising siloxane and CNTs, preferably comprising PDMS and MWCNTs.

In a sensor device according to this aspect of the invention, the micropattern is connected to an electrical interface, said electrical interface comprising at least one terminal element at one extremity of said micropattern and at least one terminal element at the other extremity of said micropattern. Said electrical interface preferably consists of a pair of electrodes. According to a particular embodiment, said electrodes are chosen among the following: Cr/Au, Pd/Au, Cr/Pt and Pd/Pt electrodes.

In a third aspect, the present invention relates to a process for preparing a sensor device, said process comprising the steps of:

- providing a support,
- forming a sensor module on said support, and
- forming, on the same support, an amplification module comprising at least one organic FET.

More particularly, a process for preparing a sensor device according to the invention comprises the steps of:

- providing a flexible support,

■ forming a sensor module comprising at least one micropattern of a composite mixture layered on said flexible support, said composite mixture comprising at least a flexible biocompatible polymer and CNTs, wherein said micropattern has a continuous rectangular shape. and
■ forming, on the same support, an amplification module comprising at least one organic FET.

A micropattern of a sensor device according to this aspect may be formed by any technique known by a person skilled in the art, and particularly by lithography or printing, including screen print.

In another particular embodiment, a process for preparing a sensor device according to the invention comprises the steps of:

■ providing a substrate,
■ depositing a first layer of a first polymer on a substrate,
■ depositing a protective material on a first part of the surface of said first polymer layer,
■ depositing a second layer of said first polymer on said protective material and on said first layer of said first polymer,
■ removing said protective material and the first part of said second layer of said first polymer,
■ depositing a protective material on the second part of said first polymer layer,
■ preparing a composite mixture by mixing a solution of a second polymer and a solution of CNTs, wherein said solutions of polymer and said CNTs are homogeneously mixed,
■ depositing a layer of said composite mixture on the surface of said first polymer layer,
■ patterning said composite in at least one micropattern,
■ removing said protective light sensitive material,
■ forming metallic electrodes by depositing metal on the opposite extremities of said patterned composite layer, and
■ depositing of organic FET channel material, by an adapted method, such as for example spin coating, screen printing, thermal evaporation or vaccum deposition, more particularly, depositing a liquid solution of CNTs, then drying said solution, if said FET channel material is CNTs: aligning CNTs, preferably by dielectrophoresis, and depositing the gate metal,
■ removing said substrate, to obtain said sensor device.

The substrate is easily chosen among known substrates by a person skilled in the art, and is preferably made of one of the following: silicon, SiO2, GaN and Germanium.

In a fourth aspect, the present invention relates to a process for designing at least one micropattern of a piezoresistive biosensor integrated in a sensor device according to the invention, said process comprising a step of calculating the optimal surface area of the micropattern with respect to the surface area of the piezoresistive biosensor by using the following formulae:

$$area\% = \frac{^q/_{2p} - a_p}{a_s - a_p} \cdot 100$$

wherein p is the ratio of composite resistance versus sensor area ; q is the cross point of the linear relationship of composite resistance and sensor area; $a_p$ is the area of one micropattern, and $a_s$ is the total sensor area.

In a micropattern of a piezoresistive biosensor according to this particular aspect of the invention, a "micropattern unit" is defined as a volume having dimensions d x d x d, as illustrated in figures 2A to 2C. For a single "micropattern unit", the conductive network of CNTs on the composite CNTs-polymer, for example a MWCNTs-pPDMS composite, can be understood by using the percolation theory. Uniform distribution of CNTs within the composite is desired, however, in practice there are not straight/aligned CNTs but rather tangled CNT lines as in Figure 2B. In considering the formation of a percolation network, the distribution and connections of CNTs is highly important. The aspect ratio (length/diameter) of CNTs is taken into account and has an impact of quantum tunneling resistance between CNT-to-CNT connections. For a single micropattern unit, the percolation threshold is calculated in terms of weight percentage as:

$$wt\% = \frac{\rho_{CNT} \times V_{CNT}}{\rho_{CNT} \times V_{CNT} + \rho_{PDMS} \times V_{PDMS}} \qquad \text{(Equation 1)}$$

where $\rho_{CNT}$ and $\rho_{PDMS}$ are the concentration densities of CNTs and PDMS, respectively. Volume by CNTs ($V_{CNT}$) depends on the total number of CNTs and dispersion quality. Volume of PDMS ($V_{PDMS}$) depends on the volume of micropattern unit (*dxdxd*). The *wt%* gives the percolation threshold (or minimum concentration of CNTs) for micropattern unit area. It is important to note that the $\rho_{PDMS}$ density of PDMS (such as porosity) also matters on the CNT percolation threshold and can be an essential feature for reducing *wt%*.

By using percolation theory, the composite material conductivity ($\sigma$) of the micropattern unit is calculated as:

$$\sigma = \sigma_0(wt_{max} - wt_{CNT})^t \qquad \text{(Equation 2)}$$

where $\sigma_0$ is a constant, $wt_{max}$ is the max weight fraction (for example 2.5%) of CNTs, and $wt_{CNT}$ is weight fraction computed in EQ1, and t is the critical exponent based on percolation.

Then, the sensitivity of the sensor (Gauge Factor (GF)) is calculated by taking the ratio of the resistance change to lengthwise strain $\varepsilon$, as:

$$S = \frac{\Delta R/R_0}{\varepsilon} \qquad \text{(Equation 3)}$$

Thus, the micropattern shape is designed by engineering the resistivity of each micropattern unit. By understanding the resistivity change on the micropattern unit, a micropattern shape that will lead to optimal performance of strain sensor can be designed in a controllable manner. Combining micropattern units in a regular and continuous pattern allows continuity of CNTs' networks with controllable sensitivity performance.

For a given sensor area, the micropatterns are distributed on *area%* of sensor area.

The following analytical steps are performed to compute the *area%* for patterns to use in the total sensor area:

a) Sensitivity is defined as a function of sensor area

$$S(area) = \frac{\Delta R/R_0/area}{\varepsilon} = \frac{\Delta R}{\varepsilon R_0} \cdot area = \frac{R_{tunneling}(area)}{\varepsilon R_0} \cdot area \qquad \text{(Equation 4)}$$

the change on resistance $\Delta R$ on MWCNT/PDMS due to the tunneling resistance $R_{tunneling}$(area) due to CNT agglomeration and creating resistive paths is expressed.

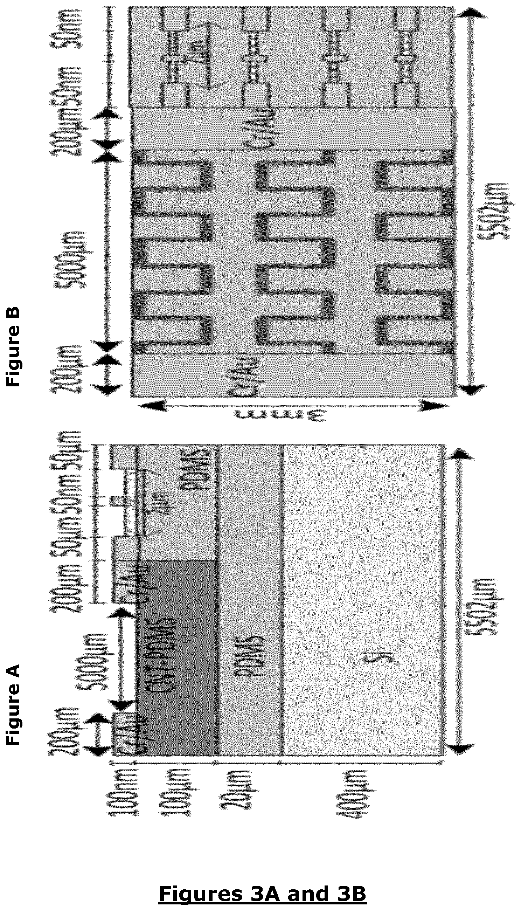

b) Tunneling resistance with area
For a given concentration of CNTs (*wt%*) and for a given stress $\varepsilon$, the relationship between tunneling resistance and area is approximated as in Figure 2, which shows the decreasing linear relationship between tunneling resistance and area. Figures 3A and 3B illustrate how tunneling resistance changes with area for a fixed concentration CNTs and a given stress.

Analytically the sensitivity can be expressed with respect to area and tunneling resistance as:

$$S(area) = \frac{R_{tunneling}(area)}{\varepsilon R_0} \cdot area = \frac{(-p \cdot area + q)}{\varepsilon R_0} \cdot area = \frac{-p \cdot area^2 + q \cdot area}{\varepsilon R_0} \qquad \text{(Equation 5)}$$

by taking first order derivative, the critical point or the optimal surface area can be identified as:

$$\frac{dS(area)}{d(area)} = -2p \cdot area + q = 0 \qquad \text{(Equation 6)}$$

where optimal area threshold is found as *area = q/2p.*

For any given single pattern shape, its area can be defined as $a_p$ and the total sensor area can be defined as $a_s$.

To calculate the optimal pattern area for a any given sensor with parameters $a_p$ and $a_s$ (as in Figure 3), the optimal area is as:

$$area\% = \frac{q/2p - a_p}{a_s - a_p} \cdot 100 \qquad \text{(Equation 7)}$$

In an example of a sensor design area with micropattern unit of d, the area% is 50%.

In a particular embodiment, the present invention relates to a process for preparing a sensor device according to the second aspect of the invention, comprising as a sensor module a piezoresistive biosensor comprising at least one micropattern of a composite mixture, said composite mixture comprising a flexible polymer and carbon nanotubes (CNTs), said process comprising:

- optionally a step of calculating the optimal surface area of the micropattern with respect to the surface area of the piezoresistive biosensor by using the following formulae:

$$area\% = \frac{q/2p - a_p}{a_s - a_p} \cdot 100$$

and the successive steps of:
- providing a substrate,
- depositing a first layer of a first polymer on a substrate,
- depositing a protective material on a first part of the surface of said first polymer layer,
- depositing a second layer of said first polymer on said protective material and on said first layer of said first polymer,
- removing said protective material and the first part of said second layer of said first polymer,
- depositing a protective material on the second part of said first polymer layer,
- preparing a composite mixture by mixing a solution of a second polymer and a solution of CNTs,
- depositing a layer of said composite mixture on the surface of said first polymer layer,
- patterning said composite in at least one micropattern as optionally calculated in the first step of the process,
- removing said protective light sensitive material,
- forming metallic electrodes by depositing metal on the opposite extremities of said patterned composite layer, and
- depositing of organic FET channel material, by an adapted method, such as for example spin coating, screen printing, thermal evaporation or vacuum deposition, more particularly, depositing a liquid solution of CNTs, then drying said CNTs solution,
- if said FET channel material is CNTs: aligning CNTs, preferably by dielectrophoresis, and depositing the gate metal,
- removing said substrate, to obtain said piezoresistive biosensor.

The present invention also relates to a process for preparing a sensor device according to the second aspect of the invention, wherein the support of said sensor comprises a flexible and biocompatible material, in particular a flexible and biocompatible polymer.

In a fifth aspect, the present invention relates to an apparatus comprising at least one sensor device according to the invention, or at least one sensor device obtained by a process according the invention, wherein said apparatus is a biosignal monitoring apparatus chosen among a non-implantable apparatus and an implantable apparatus.

An apparatus according to the invention is for example a patch which may be held again the skin of a human or an animal.

The present invention further relates to the use of at least one apparatus according to the invention:

- for providing a biosignal chosen among: electroencephalogram (EEG), electrocardiogram (ECG), electromyogram (EMG), mechanomyogram (MMG), electrooculography (EOG), galvanic skin response (GSR), magnetoencephalogram (MEG), or
- for monitoring a body parameter chosen among: respiratory flow, body temperature, heart rate and blood pressure.

As an example, providing an electrocardiogram requires the presence of preferably 3 apparatus according to the invention.

The present invention further relates to a process for providing a biosignal or for monitoring a body parameter comprising the steps of:

- attaching at least one apparatus according to the invention to a surface of said body,
- passing a current through said at least one apparatus, and
- sensing the current passing through said at least one apparatus.

**EXAMPLES**

**Example 1:** Process for preparing a sensor device

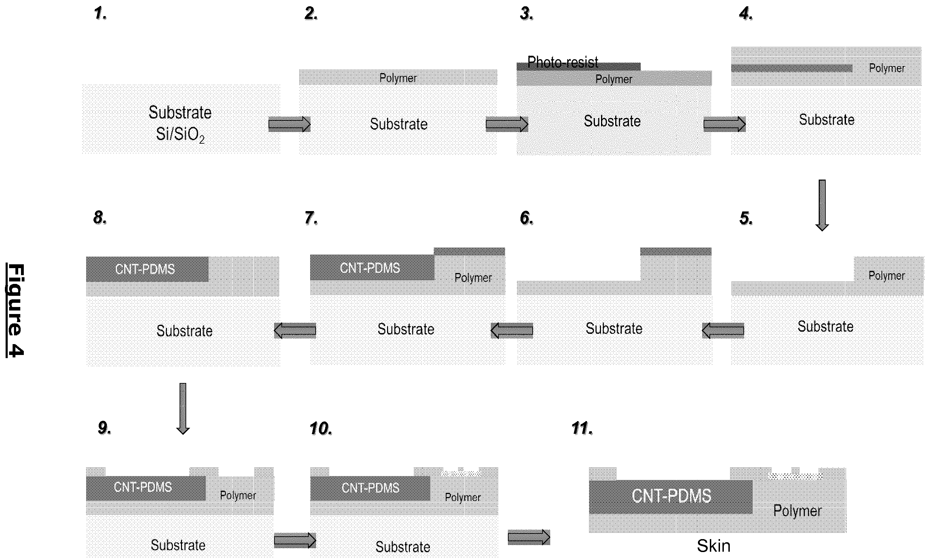

A sensor device according to invention is represented in figure 2A and 2B, and is prepared as follows (numbers refer to the successive steps indicated in figure 4):

- providing a Si/SiO2 substrate (1)
- depositing a first layer of a first polymer, for example PDMS, on said substrate (2)
- depositing a protective material on a first part of the surface of said first polymer layer, said protective material being for example a photoresist (3),
- depositing a second layer of said first polymer on said protective material and on said first layer of said first polymer (4),
- removing said protective material and the first part of said second layer of said first polymer (5),
- depositing a protective material on the second part of said first polymer layer (6),
- preparing a composite mixture by mixing a solution of a second polymer, for example PDMS, and a solution of CNTs,
- depositing a layer of said composite mixture on the surface of said first polymer layer (7)
- patterning said composite in at least one micropattern as optionally calculated in the first step of the process (8),
- removing said protective light sensitive material (8),
- forming metallic electrodes by depositing metal on the opposite extremities of said patterned composite layer (9),
- depositing a liquid solution of CNTs, then drying said CNTs solution (10), on the polymer surface area corresponding to the at least one organic FET,
- aligning CNTs, preferably by dielectrophoresis, and depositing the gate metal (11),
- removing said substrate, to obtain said piezoresistive biosensor. Step 11 also represents the contact, for example, with skin.

**Example 2:** Process for preparing a sensor device with an optimized piezoresistive biosensor

When preparing a sensor device comprising, as a sensor module, a piezoresistive biosensor comprising at least one micropattern of a composite mixture, the optimal surface area of the micropattern is calculated with respect to the surface area of the piezoresistive biosensor by using the following formulae:

$$area\% = \frac{{}^q/_{2p} - a_p}{a_s - a_p} \cdot 100$$

wherein p is the ratio of composite resistance versus sensor area ; q is the cross point of the linear relationship of composite resistance and sensor area; $a_p$ is the area of one micropattern, and $a_s$ is the total sensor area.
The process for preparing the device is as described in example 1, wherein in step (8) the composite layer is patterned in agreement with the design calculated in the first step of the process.

**Claims**

1. Sensor device comprising a sensor module connected to an amplification module, said amplification module comprising at least one organic field effect transistor (FET) and amplifying a signal transmitted by said sensor module, wherein said sensor module and said amplification module are co-integrated on a same support.

2. Sensor device according to the preceding claim, wherein said sensor device comprises several organic FET in a parallel circuit.

3. Sensor device according to any of the preceding claims, wherein the organic FET is a carbon nanotubes field effect transistor (CNTFET).

4. Sensor device according to any of the preceding claims, wherein the sensor module and the amplification module comprise CNTs.

5.  Sensor device according to any of the preceding claims, wherein the support is biocompatible.

6.  Sensor device according to any of the preceding claims, wherein the support is biocompatible and flexible and comprises at least a flexible biocompatible polymer, preferably chosen among:

    - siloxane, preferably PolyDimethylSiloxane (PDMS),
    - acrylate, preferably Poly(methylmetacrylate) (PMMA),
    - polycarbonate and
    - poly-L-lactide (PLA).

7.  Sensor device according to any of the preceding claims, wherein said organic FET has a channel length from 1 to 3 $\mu$m, preferably a channel length of 2 $\mu$m.

8.  Sensor device according to any of the preceding claims, wherein said sensor module is a piezoresistive biosensor comprising at least one micropattern of a composite mixture layered on the support, said composite mixture comprising at least a flexible polymer and carbon nanotubes (CNTs).

9.  Sensor device according to claim 8, wherein said at least one micropattern has a continuous rectangular shape.

10. Process for preparing a sensor device according to any of preceding claims, said process comprising the steps of :

    - providing a support,
    - forming a sensor module on said support, and
    - forming, on the same support, an amplification module comprising at least one organic FET.

11. Process for preparing a sensor device according to any of claims 8 or 9, comprising the steps of :

    - providing a flexible support,
    - forming a sensor module comprising at least one micropattern of a composite mixture layered on said flexible support, said composite mixture comprising at least a flexible biocompatible polymer and CNTs, wherein said micropattern has a continuous rectangular shape. and
    - forming, on the same support, an amplification module comprising at least one organic FET.

12. Process for designing at least one micropattern of a sensor device according to any of claims 8 or 9, said process comprising a step of calculating the optimal surface area of the micropattern with respect to the surface area of the piezoresistive biosensor by using the following formulae:

$$area\% = \frac{{}^{q}/_{2p} - a_p}{a_s - a_p} \cdot 100$$

13. Process for preparing a sensor device according to any of claims 8 or 9, said process optionally comprising a step of calculating the optimal surface area of the micropattern with respect to the surface area of the piezoresistive biosensor by using the following formulae:

$$area\% = \frac{{}^{q}/_{2p} - a_p}{a_s - a_p} \cdot 100$$

and comprising the successive steps of:

    - providing a substrate,
    - depositing a first layer of a first polymer on a substrate,
    - depositing a protective material on a first part of the surface of said first polymer layer,
    - depositing a second layer of said first polymer on said protective material and on said first layer of said first polymer,

- removing said protective material and the first part of said second layer of said first polymer,
- depositing a protective material on the second part of said first polymer layer,
- preparing a composite mixture by mixing a solution of a second polymer and a solution of CNTs,
- depositing a layer of said composite mixture on the surface of said first polymer layer,
- patterning said composite in at least one micropattern as calculated in the first step,
- removing said protective light sensitive material,
- forming metallic electrodes by depositing metal on the opposite extremities of said patterned composite layer, and
- depositing of organic FET channel material, and depositing the gate metal,
- removing said substrate, to obtain said piezoresistive biosensor.

**14.** Process according to any of claims 10 to 13, wherein said first and second polymers are flexible and biocompatible.

**15.** Apparatus comprising a sensor device according to anyone of claims 1 to 9 or a sensor device obtained by a process according to any of claims 10 to 14, said apparatus being a biosignal monitoring apparatus chosen among a non-implantable apparatus and an implantable apparatus.

**16.** Use of at least one apparatus according to claim 15

- for providing a biosignal chosen among: electroencephalogram (EEG), electrocardiogram (ECG), electromyogram (EMG), mechanomyogram (MMG), electrooculography (EOG), galvanic skin response (GSR), magnetoencephalogram (MEG), or
- for monitoring a body parameter chosen among: respiratory flow, body temperature, heart rate and blood pressure.

**17.** Process for providing a biosignal or for monitoring a body parameter comprising the steps of:

- attaching at least one apparatus according to claim 15 to a surface of said body,
- passing a current through said at least one apparatus, and
- sensing the current passing through said at least one apparatus.

**Figure 1**

Figure A

Figure B

Figure C

**Fig. 2A to 2C**

**Figures 3A and 3B**

**Figure 4**

Europäisches
Patentamt

European
Patent Office

Office européen
des brevets

# EUROPEAN SEARCH REPORT

Application Number

EP 18 16 7680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2017/208977 A1 (UNIV OSAKA [JP])<br>7 December 2017 (2017-12-07)<br>* figures 1, 2, 4, 5, 6 *<br>* paragraph [0016] - paragraph [0077] *<br>----- | 1,2,5-7,<br>10,12,<br>16,17<br>15 | INV.<br>G01N27/414<br>B82Y15/00<br>B82Y30/00<br>A61B5/0408 |
| X<br><br>Y<br>A | CN 105 841 849 A (UNIV ELECTRONIC SCIENCE & TECH CHINA) 10 August 2016 (2016-08-10)<br>* figures 1, 2, 3 *<br>* paragraph [0011] - paragraph [0054] *<br>* paragraph [0006] *<br>----- | 1,5-14,<br>16,17<br>3,4<br>15 | |
| X<br><br><br><br><br><br><br><br><br><br><br>A | HENG ZHANG ET AL: "High-Performance Carbon Nanotube Complementary Electronics and Integrated Sensor Systems on Ultrathin Plastic Foil",<br>ACS NANO,<br>vol. 12, no. 3,<br>29 January 2018 (2018-01-29), pages 2773-2779, XP055501109,<br>US<br>ISSN: 1936-0851, DOI:<br>10.1021/acsnano.7b09145<br>* figures 1, 2, 3, 4 *<br>* Section: "ABSTRACT";<br>page 2773 *<br>* Section: "METHODS";<br>page 2778, column 1, paragraph 2 - column 2, paragraph 3 *<br>----- | 1-3,5-7,<br>10,12,<br>16,17<br><br><br><br><br><br><br><br><br>13-15 | TECHNICAL FIELDS SEARCHED (IPC)<br><br>G01N<br>A61B<br>G01L |

-/--

The present search report has been drawn up for all claims

| Place of search | Date of completion of the search | Examiner |
|---|---|---|
| Munich | 22 August 2018 | Melzer, Katharina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................
& : member of the same patent family, corresponding
    document

EPO FORM 1503 03.82 (P04C01)

page 1 of 3

Europäisches
Patentamt

European
Patent Office

Office européen
des brevets

**EUROPEAN SEARCH REPORT**

Application Number

EP 18 16 7680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y. YAMAMOTO ET AL: "Printed multifunctional flexible device with an integrated motion sensor for health care monitoring", SCIENCE ADVANCES, vol. 2, no. 11, 23 November 2016 (2016-11-23), pages e1601473-e1601473, XP055500870, DOI: 10.1126/sciadv.1601473 | 1-7,10, 12,16,17 | |
| A | * figures 1, 2, 3, 4 * <br> * Section: "Abstract"; page 1 * <br> * Section: "MATERIALS AND METHODS"; page 7, column 1, paragraph 4 - page 8, column 1, paragraph 1 * | 15 | |
| Y | LIU NA ET AL: "High-performance carbon nanotube thin-film transistors on flexible paper substrates", APPLIED PHYSICS LETTERS, A I P PUBLISHING LLC, US, vol. 106, no. 10, 9 March 2015 (2015-03-09), XP012195440, ISSN: 0003-6951, DOI: 10.1063/1.4914400 [retrieved on 1901-01-01] | 3,4 | |
| A | * page 106, column 1, paragraph 2 - paragraph 4 * | 1,10,12 | |

TECHNICAL FIELDS
SEARCHED (IPC)

-/--

The present search report has been drawn up for all claims

| Place of search | Date of completion of the search | Examiner |
|---|---|---|
| Munich | 22 August 2018 | Melzer, Katharina |

EPO FORM 1503 03.82 (P04C01)

Europäisches Patentamt
European Patent Office
Office européen des brevets

# EUROPEAN SEARCH REPORT

Application Number

EP 18 16 7680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSUYOSHI SEKITANI ET AL: "Ultraflexible organic amplifier with biocompatible gel electrodes", NATURE COMMUNICATIONS, vol. 7, 29 April 2016 (2016-04-29), page 11425, XP055493858, DOI: 10.1038/ncomms11425 | 1,2, 5-12,16, 17 | |
| A | * figures 3, 4, 5 * <br> * Section: "Abstract"; page 1 * <br> * Section: "Methods"; page 7, column 2, paragraph 3 - page 10, column 1, paragraph 4 * <br> ----- | 13,15 | |

TECHNICAL FIELDS
SEARCHED (IPC)

The present search report has been drawn up for all claims

| Place of search | Date of completion of the search | Examiner |
|---|---|---|
| Munich | 22 August 2018 | Melzer, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

**ANNEX TO THE EUROPEAN SEARCH REPORT
ON EUROPEAN PATENT APPLICATION NO.**

EP 18 16 7680

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2018

| Patent document cited in search report | Publication date | Patent family member(s) | Publication date |
|---|---|---|---|
| WO 2017208977 A1 | 07-12-2017 | JP 2017217098 A<br>WO 2017208977 A1 | 14-12-2017<br>07-12-2017 |
| CN 105841849 A | 10-08-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANKLIN ; CHEN.** Length scaling of carbon nanotube transistors. *Nature Nanotechnology Letters,* 2010, vol. 5, 858-862
- **SO et al.** Carbon nanotube based pressure sensor for flexible electronics. *Nature Nanotechnology Letters,* 2010, vol. 5, 858-862

- **YAMAMOTO et al.** Printed multifunctional flexible device with an integrated motion sensor for health care monitoring. *Applied Sciences and Engineering,* 2016
- **KOO et al.** Wearable electrocardiogram monitor using carbon nanotube electronics and color-tunable organic light-emitting diodes. *ACS NAno,* 2017, vol. 11, 10032-41